# EUROPEAN PATENT APPLICATION

(11) **EP 2 463 956 A1**
(43) Date of publication of application: **13.06.2012**
(21) Application number: 11158010.6
(22) Date of filing: 14.03.2011
(51) Int. Cl.: H01Q 1/38, H04M 1/02

(54) **Antenna module, and touch module and electronic device using the same**

(30) Priority: 10.12.2010 TW 099143297
(71) Applicant: Smart Approach Co., Ltd., Chutung, Hsinchu, Taipei (TW)
(72) Inventor: Wang, Cheng-Ke, Yanpu Township (TW)
(74) Representative: Viering, Jentschura & Partner

(57) **Abstract**

An antenna module, and a touch module and an electronic device using the same are presented. The antenna module includes a transparent substrate and an antenna circuit disposed on the transparent substrate. The antenna circuit includes a pair of electrodes and a coil assembly connected to the electrodes. The electronic device includes a mother board, a display panel, and an antenna module. The transparent substrate and the mother board are overlapped on opposite surfaces of the display panel, such that a circuit design space of the electronic device using the antenna module is reduced.

## Description

### Field of Invention

The present invention relates to an electronic device and an antenna module thereof, and more particularly to an antenna module disposed on a touch panel, and an electronic device using the same.

### Related Art

Radio Frequency Identification (RFID) technology is a short-distance radio communication technology, and is suitable for use in electronic commerce such as an electronic wallet and an easy card, and identification such as access control.

As described above, some mobile phones currently are equipped with the RFID technology, and thus can provide convenient electronic commerce service such as an electronic wallet and an easy card. Therefore, a user can go shopping and use a public transportation system by only taking such a mobile phone when going out without a wallet.

However, inside a mobile phone equipped with the RFID technology, an RFID antenna module is generally disposed. A conventional RFID antenna module may be a separate element disposed in the mobile phone, thus increasing a volume of the mobile phone. Therefore, conventionally the RFID antenna module is directly disposed on a mother board of the mobile phone, so as to reduce the volume occupied by the antenna module. However, an antenna module thus designed occupies a large area on the mother board, such that the arrangement of other multiple electronic elements (such as capacitors, inductors, resistors, diodes, and transistors) on the mother board is influenced. In other words, the mobile phone is becoming thinner and more miniature, and thus an inner space of the mobile phone becomes crowded. Therefore, by using the conventional means of disposing the RFID antenna module inside the mobile phone, a person encounters many difficulties in designing space allocation of inner parts in the mobile phone.

### SUMMARY OF THE INVENTION

In view of the above problem, the present invention is an antenna module and an electronic device using the same, so as to resolve the problem in the prior art of difficulty in space planning and allocation of inner parts in a mobile phone.

The present invention provides an antenna module, which comprises a transparent substrate and an antenna circuit disposed on the transparent substrate. The antenna circuit comprises a coil assembly and a pair of electrodes connected to the coil assembly.

The present invention provides an electronic device, which comprises a mother board, a display panel, and an antenna module. The display panel is overlapped on and coupled to the mother board. The antenna module comprises a transparent substrate, an antenna circuit, and a flexible printed circuit. The transparent substrate is overlapped on the display panel, and the transparent substrate and the mother board are located at opposite two surfaces of the display panel. The antenna circuit is configured on the transparent substrate, and comprises a coil assembly and a pair of electrodes connected to the coil assembly. The flexible printed circuit is coupled to the electrodes and the mother board.

The present invention provides a touch module, which comprises a touch panel and an antenna module. The touch panel has a transparent substrate, and the antenna module has an antenna circuit. The antenna circuit is configured on the transparent substrate, and comprises a coil assembly and a pair of electrodes connected to the coil assembly.

According to the antenna module and the electronic device using the same of the present invention, the antenna circuit is directly formed on the transparent substrate overlapped on the display panel, so the fabrication is relatively simple, and the volume space occupied by the antenna module in the electronic device is reduced. In addition, compared with the difficulties in arranging other electronic elements caused by disposing the antenna circuit on the mother board in the prior art, the antenna module of the present invention can avoid the difficulties encountered in the prior art. Therefore, such an antenna module has good structure integrity, and thus can facilitate the development of the electronic device towards miniaturization and thinning.

These and other aspects of the present invention will become apparent from the following description of the preferred embodiment taken in conjunction with the following drawings, although variations and modifications therein may be affected without departing from the spirit and scope of the novel concepts of the disclosure.

### BRIEF DESCRIPTION OF THE DRAWINGS

The accompanying drawings illustrate one or more embodiments of the invention and, together with the written description, serve to explain the principles of the invention. Wherever possible, the same reference numbers are used throughout the drawings to refer to the same or like elements of an embodiment, and wherein:
FIG. 1A is a schematic structural view of an antenna module according to an embodiment of the present invention;
FIG. 1B is a schematic structural view of an antenna module according to another embodiment of the present invention;
FIG. 1C is a partial schematic structural view of an antenna module according to another embodiment of the present invention;
FIG. 2A is a schematic structural view of an electronic device according to an embodiment of the present invention; and
FIG. 2B is a structural assembled view of an electronic device according to another embodiment of the present invention.

### DETAILED DESCRIPTION OF THE INVENTION

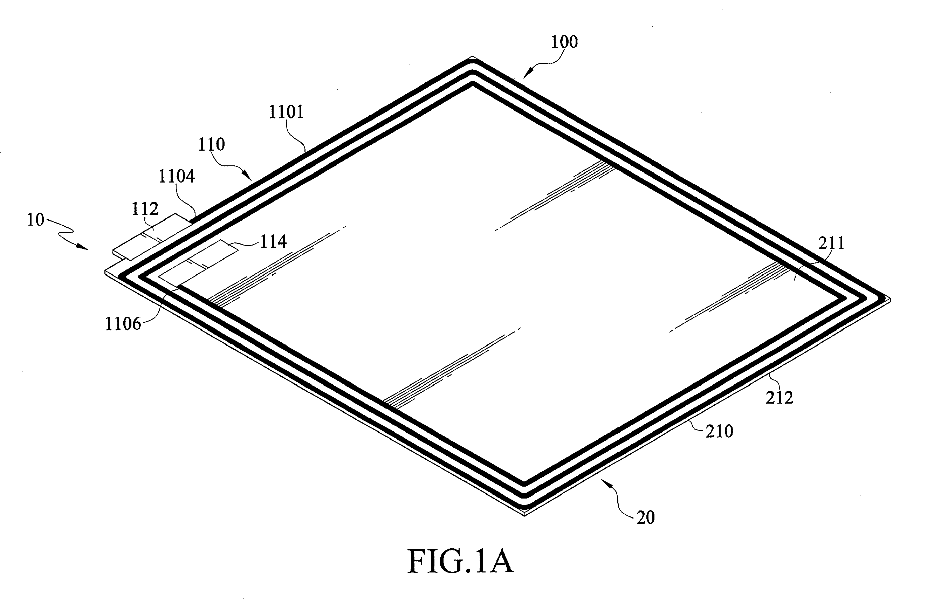

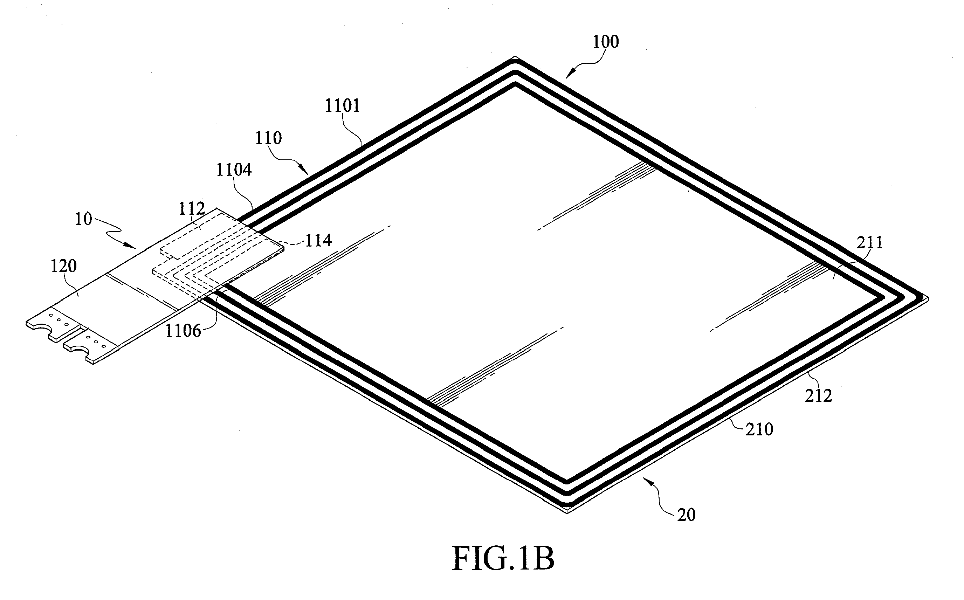

FIG. 1A is a schematic structural view of an antenna module according to an embodiment of the present invention; and FIG. 1B is a schematic structural view of an antenna module according to another embodiment of the present invention.

In an embodiment of the present invention, an antenna module 10 comprises a transparent substrate 210 and an antenna circuit 100. The transparent substrate 210 may be a glass substrate and has a rectangular shape, but the present invention is not limited thereto. The antenna circuit 100 is configured on the transparent substrate 210, and comprises a pair of electrodes 112 and 114, and a coil assembly 110. The transparent substrate 210 has a first surface 211 and a second surface 212 opposite to each other.

The coil assembly 110 is formed on the first surface 211 of the transparent substrate 210, and disposed surrounding a periphery of the first surface 211. In this embodiment, the coil assembly 110 may be formed on the transparent substrate 210 through electroplating, but the present invention is not limited thereto. For example, the coil assembly 110 may be formed on the transparent substrate 210 by printing, sputtering, laser engraving, laminating, or other chemical or physical vapor deposition methods.

In addition, the coil assembly 110 comprises a spiral coil 1101, a first connected port 1104, and a second connected port 1106. The spiral coil 1101 may have three turns. The size, the coil width, the number of coils and the number of turns are not intended to limit the present invention. For example, the number of the turns may be three as shown in FIG. 1A, or may be greater than or less than three, and the number of the spiral coil may be greater than one. The spiral coil 1101 can induce an electromagnetic signal, and convert the electromagnetic signal into an electrical signal. In addition, depending on electromagnetic signals with different frequencies or different circuit designs, the spiral coil 1101 may have a rectangular shape as shown in FIG. 1A, but the present invention is not limited thereto, for instance, the spiral coil 1101 may have a round shape, an oval shape, or other geometric shapes.

It should be noted that in the drawing of this embodiment, a size of the transparent substrate 210, a width of the spiral coil 1101 is presented in a way for ease of understanding by a reader. However, scales of elements in the drawing are not intended to limit the present invention. For example, in practice, a width of the coil 1101 1 may be less than 5 mm, so that almost no plane area of the transparent substrate 210 is occupied.

In addition, the electrodes 112 and 114 are respectively connected to the first connected port 1104 and the second connected port 1106. Moreover, the antenna module 10 may further comprise a flexible printed circuit 120, which is coupled to the electrodes 112 and 114 (as shown in FIG. 1B). The flexible printed circuit 120 may be coupled to the electrodes 112 and 114 through spanning or perforating.

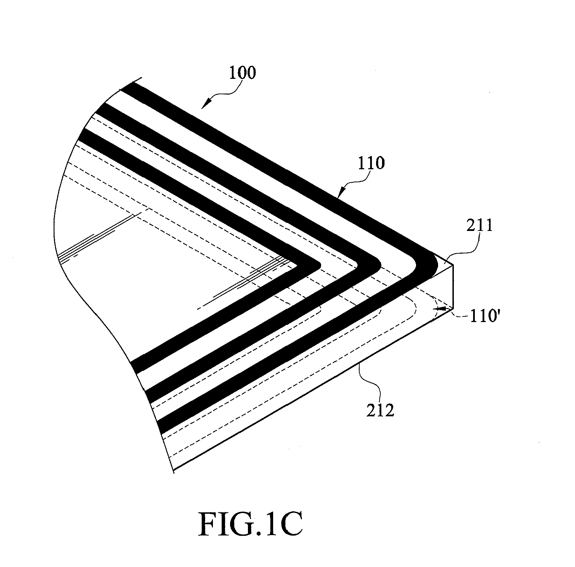

It should be noted that the antenna module 10 is formed on the first surface 211 of the transparent substrate 210 by a set of coil assemblies 110, but the present invention is not limited thereto. In an embodiment of the present invention, the antenna module 10 may comprise two sets of coil assemblies 110 and 110'. The coil assembly 110 is disposed on the first surface 211, and the coil assembly 110' is disposed on the second surface 212, as shown in FIG. 1C. The coil assembly 110 may be electrically connected to the coil assembly 110' in serial or in parallel, and the coil assemblies 110 and 110' may be coupled through spanning or perforating.

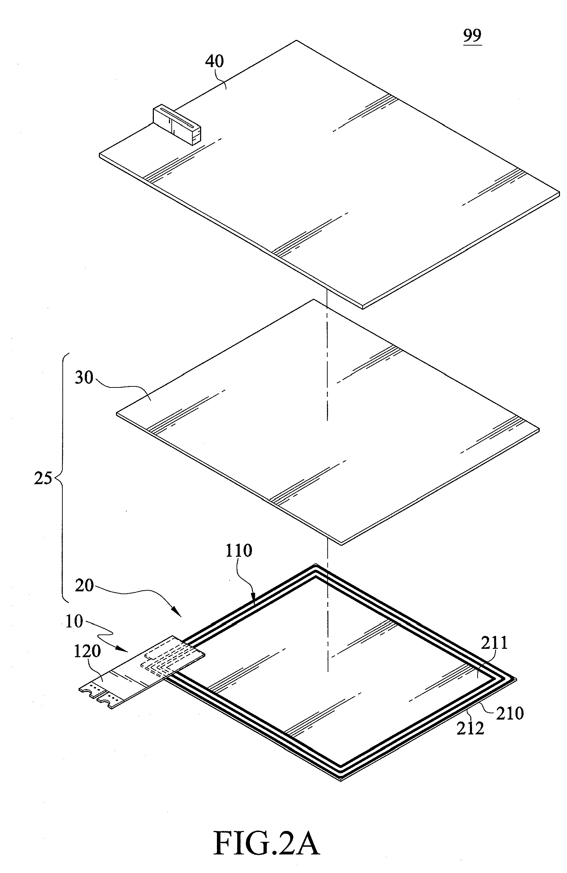

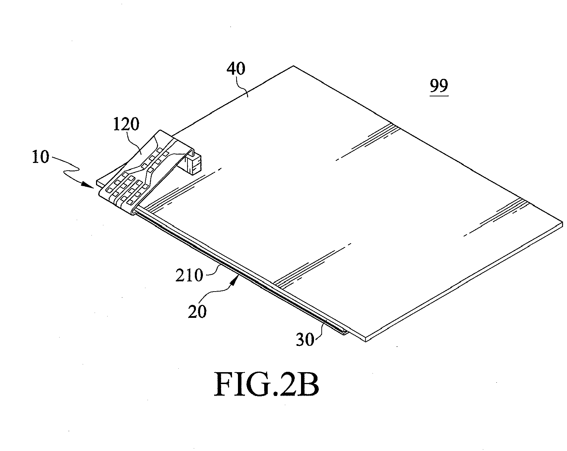

Hereinafter, an electronic device using the antenna module 10 according to the embodiment is described. FIG. 2A is a schematic structural view of an electronic device according to an embodiment of the present invention; and FIG. 2B is a structural assembled view of an electronic device according to another embodiment of the present invention. As the antenna module 10 is described in detail above, the section related to the antenna module 10 is not described here again.

In this embodiment, an electronic device 99 comprises a mother board 40, a display panel 30, a touch panel 20, and an antenna module 10. The display panel 30, the touch panel 20, and the antenna module 10 may form a touch module. The touch panel 20 is an existing input unit commonly used in an electronic device such as a mobile phone and a computer. The touch panel 20 generally comprises a touch detection device (not shown) and a touch panel controller (not shown). The touch detection device is mounted in front of the display panel, and used for detecting a touch position of a user, and then transferring a contact position sensing signal to the touch panel controller. The touch panel controller receives and converts the signal into a coordinate signal to a central processing unit (CPU) of the electronic device, so as to enable the CPU to interpret the signal and give and accept an instruction signal to achieve an expected input effect of a user. The touch panel 20 according to this embodiment may be, but not limited to, a capacitor type touch panel. For example, the touch panel 20 may also be a resistor type touch panel, an IR type touch panel, or a surface sound wave touch panel.

In addition, the transparent substrate 210 of the antenna module 10 may be disposed on the touch panel 20 as an additionally disposed element. Alternatively, the transparent substrate. 210 is a part of elements of the touch panel 20. In other words, the touch panel 20 comprises the transparent substrate 210, and the coil assembly 110 of the antenna module 10 is disposed on the transparent substrate 210 of the touch panel 20.

When the touch panel 20 of the touch module is overlapped on the display panel 30 and matches with the display panel 30, a touch screen 25 is formed. In addition, the display panel 30 may be a rigid display such as a Liquid Crystal Display (LCD) or a flexible display such as an Electronic Paper (E-paper).

In this embodiment, the display panel 30 is overlapped on and coupled to the mother board 40, and the touch panel 20 is overlapped on the display panel 30. In other words, the touch panel 20 and the mother board 40 are located on opposite surfaces of the display panel 30. The transparent substrate 210 disposed on the touch panel 20 may be a glass substrate. Moreover, the antenna module 10 is disposed on the first surface 211 of the transparent substrate 210, and the transparent substrate 210 on the touch panel 20 is applied to the display panel 30 with the first surface 211. A flexible printed circuit 120 of the antenna module 10 is electrically connected to a slot on the mother board 40 in a flexible folding manner, so as to couple the antenna module 10 to the mother board 40, and match with an RFID chip (not shown) on the mother board 40 to form an RFID system. It should be noted that shapes, sizes, and scales of the mother board 40, the display panel 30, the touch panel 20, and the antenna module 10 in the drawing of this embodiment, and the connection manner of the flexible printed circuit 120 and the mother board 40 are presented in a way for simplification and ease of understanding by a reader. However, scales and shapes of elements in the drawing are not intended to limit the present invention. The electronic parts of the mother board 40 in the drawing are not the focuses of the present invention, and thus omitted and not shown.

It should be noted that this embodiment is described with the electronic device 99 having the touch panel 20 as an example, but the present invention is not limited thereto. For example, in another embodiment of the present invention, the electronic device 99 may not comprise the touch panel 20, and the transparent substrate 210 is directly overlapped on the display panel 30.

Using the design above, the antenna module 10 does not need to be disposed on the mother board 40, and thus a circuit configuration space of the mother board 40 is saved, so as to avoid causing difficulties to configuration of other electronic parts on the mother board 40.

According to the electronic device and the antenna module thereof of the present invention, the antenna circuit is directly formed on the glass transparent substrate of the touch panel, and thus the fabrication is simple, and almost no volume of the electronic device is increased. Moreover, the antenna module of the present invention is not disposed on the mother board, thus not causing difficulties to arrangement of other electronic parts on the mother board. Compared with the difficulties in arranging other electronic elements caused by disposing the antenna circuit on the mother board in the prior art, the antenna module of the present invention has good structure integrity and can definitely avoid the difficulties encountered in the circuit design of the mother board in the prior art. In addition, the volume of the electronic device is hardly increased with the disposition of the antenna module, which also relatively facilitates the development of the electronic device towards miniaturization and thinning.

## Claims

1. An antenna module, comprising:
a transparent substrate; and
an antenna circuit, disposed on the transparent substrate, and comprising a coil assembly and a pair of electrodes connected to the coil assembly.

2. The antenna module according to claim 1, wherein the coil assembly is disposed surrounding an edge of the transparent substrate.

3. The antenna module according to claim 1, wherein the coil assembly comprises a spiral coil.

4. The antenna module according to claim 3, wherein the coil assembly further comprises two connected ports connected to the electrodes.

5. The antenna module according to claim 1, further comprising a flexible printed circuit coupled to the electrodes.

6. An electronic device, comprising:
a mother board;
a display panel, disposed on and coupled to the mother board; and
an antenna module, comprising:
a transparent substrate, overlapped on the display panel, wherein the transparent substrate and the mother board are located on opposite surfaces of the display panel;
an antenna circuit, disposed on the transparent substrate, and comprising a coil assembly and a pair of electrodes connected to the coil assembly; and
a flexible printed circuit, coupled to the electrodes and the mother board.

7. The electronic device according to claim 6, wherein the coil assembly is disposed surrounding an edge of the transparent substrate.

8. The electronic device according to claim 6, wherein the coil assembly comprises a spiral coil.

9. The electronic device according to claim 8, wherein the coil assembly further comprises two connected ports connected to the electrodes.

10. The electronic device according to claim 6, further comprising a touch panel, wherein the transparent substrate is disposed on the touch panel, and the touch panel and the mother board are located at opposite surfaces of the display panel.

11. A touch module, comprising:
a touch panel , having a transparent substrate; and
an antenna module, having an antenna circuit configured on the transparent substrate, and comprising a coil assembly and a pair of electrodes connected to the coil assembly.

12. The touch module according to claim 11, wherein the antenna module further comprises a flexible printed circuit coupled to the electrodes.

13. The touch module according to claim 11, wherein the coil assembly is disposed surrounding an edge of the transparent substrate.

14. The touch module according to claim 11, wherein the coil assembly comprises a spiral coil.

15. The touch module according to claim 14, wherein the coil assembly further comprises two connected ports connected to the electrodes.

16. The touch module according to claim 11, further comprising a display panel, the touch panel overlaps on the display panel to form a touch screen.
